# EUROPÄISCHE PATENTANMELDUNG

(11) **EP 1 146 476 A1**
(43) Veröffentlichungstag der Anmeldung: **17.10.2001**
(21) Anmeldenummer: 00107703.1
(22) Anmeldetag: 10.04.2000
(51) Int. Cl.: G06K 19/077

(54) **Mikromechanischer Generator für mobile Anwendung**

(71) Anmelder: Infineon Technologies AG, 81669 München (DE)
(72) Erfinder: Taddiken, Hans, Dr.-Ing., 81737 München (DE)
(74) Vertreter: Fischer, Volker, Dipl.-Ing.

(57) **Zusammenfassung**

Die Erfindung betrifft eine Schaltungsanordnung mit einer integrierten Schaltung zur mobilen Anwendung, beispielsweise auf einer Chipkarte. Zur Erzeugung der Versorgungsspannung der integrierten Schaltung ist eine mikromechanische Schaltung (4) vorgesehen, die einen feststehenden (10) sowie einen beweglichen (30) Substratteil mit jeweiligen Leiterbahnabschnitten (11a, 11b, 12a, 30a, 30b, 31a) umfaßt. Die Leiterbahnabschnitte (30a, 30b, 31a) des beweglichen Substratteils (30) bilden eine Spule, so daß bei einer Schwingung des beweglichen Substratteils (30) eine Spannung zur Versorgung der integrierten Schaltung erzeugt wird.

## Beschreibung

Die Erfindung betrifft eine Schaltungsanordnung zur mobilen Anwendung mit einer integrierten Schaltung und einer Einrichtung zur Erzeugung einer Versorgungsspannung für die integrierte Schaltung.

Schaltungsanordnungen zur mobilen Anwendung werden beispielsweise in Chipkarten verwendet. Eine Chipkarte umfaßt einen kartenförmigen Träger, in dem eine integrierte Schaltung angeordnet ist, die vielfältige Funktionen ausführen kann, beispielsweise die Identifikation eines Benutzers gegenüber einem Kontrollgerät in einer sicherheitskritischen Anwendung oder die Verwaltung eines Guthabens. Die Zuführung von Versorgungsspannung an die Chipkarte erfolgt bei kontaktbehafteten Chipkarten durch das Aufsetzen von Kontaktstiften auf in der Karte angeordnete Kontaktflächen und bei kontaktlosen Chipkarten durch Energieaufnahme aus einem vom Lesegerät bereitgestellten elektromagnetischen Feld. Die Spannungsversorgung kann jedoch nur aufrechterhalten werden, wenn die Chipkarte im Lesegerät eingesteckt ist oder sich im Einflußbereich des elektromagnetischen Felds befindet. Andernfalls ist die Chipkarte strom- und funktionslos.

Um auch Funktionen der Chipkarte bereitzustellen, wenn kein mechanischer oder elektromagnetischer Kontakt mit dem Lesegerät gegeben ist, können Batterien oder andere statische Energiespeicher vorgesehen werden, um die Versorgungsspannung aufrecht zu halten. Die Chipkarte kann dann beispielsweise eine Digitalanzeige oder eine Beleuchtung betreiben. Solche Lösungen sind jedoch insofern problematisch, daß eine Batterie relativ teuer ist und herstellungstechnisch einen nicht unerheblichen Aufwand bereitet.

Die Aufgabe der Erfindung besteht darin, eine Schaltungsanordnung zur mobilen Anwendung mit einer integrierten Schaltung anzugeben, die auch ohne Kontakt zu einem Lesegerät mit Spannung versorgt wird, wobei die Anordnung einfach realisierbar sein soll.

Gemäß der Erfindung wird diese Aufgabe durch eine Schaltungsanordnung zur mobilen Anwendung gelöst mit einer integrierten Schaltung und einer mikromechanischen Einrichtung zur Erzeugung einer die integrierte Schaltung versorgenden Versorgungsspannung, wobei die mikromechanische Einrichtung umfaßt: einen ersten Substratteil mit ersten Leiterbahnabschnitten und einem zweiten Substratteil, der relativ zum ersten Substratteil beweglich angeordnet ist, mit zweiten Leiterbahnabschnitten und Mittel zum Abgriff einer an den Leiterbahnabschnitten des zweiten Substratteils induzierten Spannung, die mit der integrierten Schaltung zur Zuführung von Versorgungsspannung gekoppelt sind.

Bei der Erfindung kommt eine mikromechanische Lösung zum Einsatz. Die zweiten Leiterbahnabschnitte des zweiten Substratteils sind relativ zu den ersten Leiterbahnabschnitten des ersten Substratteils beweglich gelagert, so daß unter Ausnutzung des elektrodynamischen Prinzips bei Vibration der zweiten Leiterbahn relativ zur ersten Leiterbahn in ersterer eine Spannung induziert wird. Dies liegt daran, daß der magnetische Fluß, der von der ersten Leiterbahn erzeugt wird, durch eine von der zweiten Leiterbahn gebildeten Spule sich bei Vibration ändert, woraufhin ein Strom in der zweiten Leiterbahn induziert wird. Entsprechend dem Dynamoprinzip kann die feststehende erste Leiterbahn als Stator angesehen werden, während die zweite Leiterbahn den Rotor bildet.

Zweckmäßigerweise wird die mikromechanische Anordnung aus Silizium hergestellt, wobei herkömmliche Berarbeitungstechniken angewandt werden, beispielsweise Maskentechnik, Lithographie, Ätzen, Schichtabscheidung etc. Insbesondere sind ausreichend Techniken bekannt, um den die zweiten Leiterbahnabschnitte tragenden beweglichen Substratteil herzustellen, indem entsprechende Ätztechniken aus dem Umfeld der Herstellung von Beschleunigungssensoren verwendet werden. Eine solche mikromechanische Anordnung ist kostengünstig herstellbar und gegebenenfalls integrierbar. Sie kann gegenüber der signalverarbeitenden integrierten Schaltung als separater Siliziumchip ausgeführt werden. Denkbar ist auch eine monolithische Integration zusammen mit der signalverarbeitenden Schaltung auf einem einzigen Siliziumchip. Die Gesamtanordnung ist dann skalier- und schrinkbar und an unterschiedlichste Anwendungszwecke ohne weiteres anpaßbar.

Die durch die Bewegung der Chipkarte erzeugte elektrische Energie versorgt einerseits den integrierten Schaltkreis, so daß dieser Funktionen auch außerhalb eines kontaktbehafteten Lesegeräts oder des Einflußbereichs des elektromagnetischen Feldes eines kontaktlosen Lesegeräts wahrnehmen kann, insbesondere solche Funktionen, die einen erhöhten Energieverbrauch bedeuten, beispielsweise die Anzeige spezieller Zustände der Chipkarte in einem Digitaldisplay und gegebenenfalls zusätzlich eine Beleuchtung des Displays, um eine Verwendung bei ungenügenden Lichtverhältnissen zu ermöglichen. Darüber hinaus kann die erzeugte und nicht verbrauchte Energie in einem Energiespeicher angesammelt werden. Als Energiespeicher eignet sich eine aufladbare Batterie oder ein Kondensator mit entsprechend hoher Speicherkapazität.

In vorteilhafter Ausgestaltung der Erfindung ist die erste Leiterbahn, welche in der statischen Ebene angeordnet ist, mäanderförmig ausgeführt, indem parallele, in eine Richtung verlaufende Leiterbahnabschnitte vorgesehen sind, die durch dazu quer oder senkrecht verlaufende Leiterbahnabschnitte miteinander verbunden sind. Wenn man einen Querschnitt durch die statische Ebene betrachtet, hat der durch jeweils benachbarte parallele Leiterbahnabschnitte fließende Strom jeweils entgegengesetzte Richtung. Das die Leiterbahnabschnitte umgebende Magnetfeld ist daher für jeden Leiterbahnabschnitt entgegengesetzt gerichtet. Die den Rotor bildenden Leiterbahnen verlaufen bei dieser Ausführung nur in der beweglichen Ebene. Sie sind einerseits zueinander und andererseits in Bezug auf die Leiterbahnabschnitte der statischen Ebene parallel ausgerichtet. Wenn die Leiterbahnen der beweglichen Ebene aufgrund mechanischer Bewegung in Schwingung geraten, ändert sich der von einer durch benachbarte Leiterbahnabschnitte gebildeten Schleife umfaßte magnetische Fluß, so daß ein Strom induziert wird. Durch geeignetes Parallelschalten der Vielzahl der Spulen ist ein entsprechender Summenstrom bzw. eine entsprechende Summenspannung abgreifbar. Vorzugsweise ist eine weitere statische Ebene beabstandet von der ersten statischen Ebene vorgesehen, die eine dazu entsprechende Leiterbahnstruktur aufweist, die jedoch von einem entgegengesetzten Strom durchflossen wird. Die bewegliche Ebene ist zwischen beiden statischen Ebenen angeordnet. In diesem Fall ändert sich die Orientierung des Magnetfeldanteils, der von den jeweiligen Spulen der beweglichen Ebene bei Schwingbewegung umfaßt wird.

In einer anderen bevorzugten Ausführungsform werden die parallel zueinander verlaufenden Leiterbahnabschnitte der statischen Ebene jeweils von einem Strom in gleiche Richtung durchflossen. Das daraus resultierende Magnetfeld umfaßt Feldlinien, die die gesamte Leiterbahnanordnung der statischen Ebene umschließen. Eine dazu parallele, beabstandete weitere statische Ebene weist Leiterbahnabschnitte auf, die jeweils wiederum zueinander gleichsinnig, aber verglichen mit der ersten statischen Ebene vom entgegengesetzten Strom durchflossen sind. Im Zwischenraum zwischen den beiden statischen Ebenen ergibt sich ein gleichgerichtetes Magnetfeld. Die bewegliche Ebene weist zueinander parallele Leiterbahnabschnitte auf, die mit weiteren Leiterbahnabschnitten in der statischen Ebene gekoppelt sind, um eine Spulenwindung zu bilden. Die weiteren Leiterbahnabschnitte in der statischen Ebene sind zwischen den den Stator bildenden Leiterbahnabschnitten angeordnet. Die Vielzahl der Spulen ist untereinander elektrisch parallel geschaltet. Wenn die bewegliche Ebene in Schwingung versetzt wird, ändert sich die Spulenfläche, so daß der umfaßte magnetische Fluß variiert und entsprechend eine Spannung erzeugt wird. Insgesamt ändert sich also bei Schwingung der beweglichen Ebene der von einer Spulenfläche umfaßte magnetische Fluß, so daß in der Spule ein Strom erzeugt wird. Bei der ersten Ausführungsvariante verläuft die Spulenfläche parallel zur statischen und beweglichen Ebene. Bei der zweiten Ausführungsvariante verläuft die Spulenfläche senkrecht zur statischen und beweglichen Ebene.

Zweckmäßigerweise umfaßt die Leiterbahn der statischen Ebene ein ferromagnetisches Material, beispielsweise Eisen. Um die Leitfähigkeit zu erhöhen, empfiehlt es sich, die Leiterbahn mit einer weiteren Komponente beispielsweise aus Aluminium oder Kupfer zu ergänzen. Beim ferromagnetischen Material wird während der Herstellung durch Stromeinprägung eine magnetische Vorzugsrichtung erzeugt, um eine Anfangsstromrichtung für den Strom durch die Leiterbahn der statischen Ebene festzulegen. Die Spulen der beweglichen Ebene und die Leiterbahnen der statischen Ebene sind in geeigneter Weise gekoppelt, so daß aufgrund der in den Spulen der beweglichen Ebene induzierten Ströme der Erregerstrom durch die Leiterbahnen der statischen Ebene bereitgestellt wird, entsprechend dem Selbsterregungsprinzip eines Elektromotors. Anstelle eines Ferromagnetikums kann die Vormagnetisierung durch Einprägung eines geeigneten Stroms erzeugt werden.

Nachfolgend wird die Erfindung anhand der in der Zeichnung dargestellten Ausführungsbeispiele näher erläutert. Entsprechende Elemente in verschiedenen Figuren sind mit gleichen Bezugszeichen versehen. Es zeigen:
- Figur 1: ein Prinzipschaltbild einer Chipkarte,
- Figur 2: eine perspektivische Ansicht einer ersten Ausführungsform der Anordnung,
- Figur 3: ein elektrisches Ersatzschaltbild der er- sten Ausführungsform,
- Figur 4: ein elektrisches Ersatzschaltbild einer zweiten Ausführungsform und
- Figur 5 (a) bis (c): ein elektrisches Ersatzschaltbild einer dritten Ausführungsform, wobei verschie- dene Ansichten in verschiedenen Bewe- gungsphasen dargestellt sind.

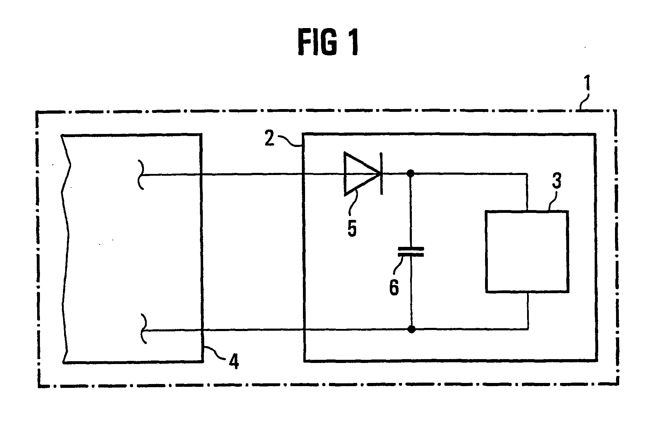

In der Figur 1 ist symbolisch das kartenförmige Trägermaterial 1 einer Chipkarte dargestellt. Die Chipkarte enthält (nicht maßstäblich dargestellt) eine integrierte Schaltung 2, in der von einem Schaltungsteil 3 signalverarbeitende Funktionen ausgeführt werden. Eine mikromechanische Schaltung 4 erzeugt durch mechanische Bewegung der Karte 1 eine elektrische Spannung, die nach entsprechender Gleichrichtung und Glättung mittels einer Diode 5 und eines Kondensators 6 die signalverarbeitende Schaltung 3 speist.

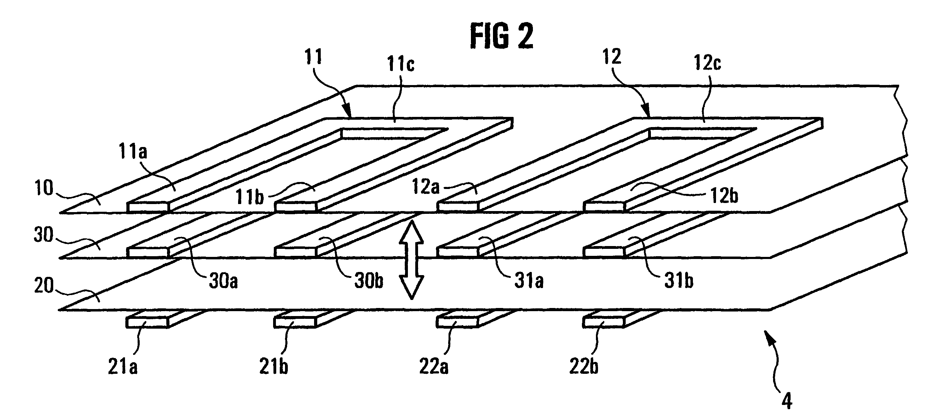

In Figur 2 ist perspektivisch ein Ausschnitt aus der Schaltung 4 dargestellt. Diese umfaßt eine erste statische Ebene 10 sowie eine zweite statische Ebene 20. Die Ebenen 10, 20 verlaufen parallel zueinander und sind voneinander beabstandet. Dazwischen ist eine bewegliche Ebene 30 angeordnet. Auf dem Substrat der Ebene 10 verläuft eine mäanderförmige Leiterbahn, von der die Teile 11, 12 dargestellt sind. Die Leiterbahn weist parallel zueinander verlaufende Abschnitte 11a, 11b, 12a, 12b auf. Diese Abschnitte sind durch dazu quer verlaufende Abschnitte 11c bzw. 12c miteinander verbunden. In dem aufgrund der Schnittdarstellung nicht sichtbaren Teil der mäanderförmigen Leiterbahn ist ein wiederum quer zu den Abschnitten 11b, 12a verlaufender Leiterbahnabschnitt vorgesehen, um diese zu verbinden. Die zweite statische Ebene 20 weist eine entsprechende mäanderförmige Struktur auf, von der die Leiterbahnabschnitte 21a, 21b, 22a, 22b sichtbar sind. In der beweglichen Ebene 30 bilden je zwei nebeneinander liegende Leiterbahnabschnitte eine Spule. In diesem Sinne sind die Abschnitte 30a, 30b zu einer Spule miteinander verbunden sowie die Abschnitte 31a, 31b. Die Ebene 30 ist derart gelagert, daß sie in vertikaler Richtung, d.h. in auf die Ebenen 10, 20 senkrecht stehender Richtung 39, bewegbar ist. Eine Vibration oder Schwingung der Ebene 30 entsteht aufgrund der Massenträgheit der Ebene 30, wenn die Chipkarte 1 bewegt wird, wenn sie beispielsweise von einem Benutzer am Körper getragen oder bewußt geschüttelt wird.

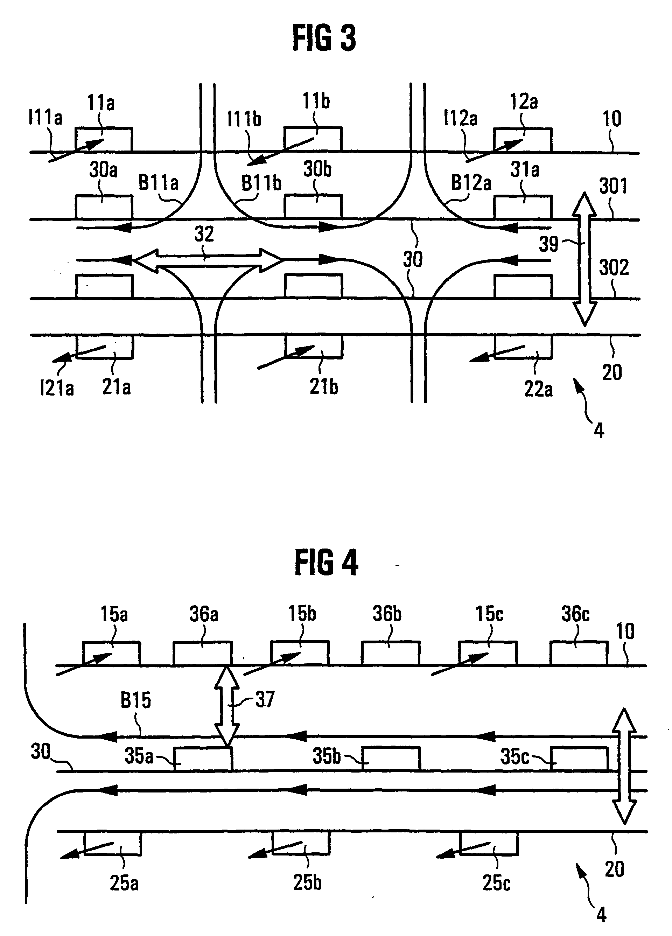

Die elektrischen Vorgänge bei einer Bewegung der Chipkarte sind in Figur 3 dargestellt. Sie zeigt im Querschnitt die Ebenen 10, 20 sowie die Ebene 30 in verschiedenen Zeitphasen, nämlich in einer ersten Stellung 301 und einer zweiten Stellung 302 während eines Schwingungsvorgangs in vertikale Richtung 39. Die benachbart liegenden Abschnitte 11a, 11b und 12a der mäanderförmigen innerhalb der Ebene 10 verlaufenden Leiterbahn werden von einem Strom durchflossen, der in jedem Leiterbahnabschnitt in gegengesetzte Richtung I11a, I11b, I12a weist. Durch den Stromfluß stellen sich die jeweiligen Leiterbahnabschnitte umgebende Magnetfelder ein, deren Feldlinien B11a, B11b, B12a symbolisch dargestellt sind. Wegen der unterschiedlichen Stromrichtung haben die Feldlinien benachbarter Leiterbahnabschnitte unterschiedliche Orientierung. Wenn die Leiterbahnabschnitte 30a und 30b umfassende Spule von der Stellung 301 zur Stellung 302 schwingt, verändert sich der durch die Spulenfläche 32 verlaufende magnetische Fluß. Die Leiterbahn der Ebene 20 ist im Vergleich zur Leiterbahn der Ebene 10 von einem entgegengesetzten Strom durchflossen. Während der Bewegung der Ebene 30 von der Stellung 301 zur Stellung 302 ändert sich daher die Richtung des Magnetfelds.

Die Leiterbahnen 21a, 30a sowie 11a sind übereinander angeordnet. Die durch die Abschnitte 30a und 30b gebildete Spule ist mit sämtlichen Spulen der Ebene 30 parallel geschaltet, so daß ausgangsseitig alle in die jeweiligen Spulen induzierten Ströme kombiniert werden. Durch geeignete, aus dem Elektromotorenbau bekannten Prinzipen wird ein Teil des induzierten Stroms in die Leiterbahnen der statischen Ebenen 10, 20 zurückgeführt. Dadurch wird ein selbsterregtes System gebildet. Die Leiterbahnen der Ebenen 10, 20 umfassen vorzugsweise ein ferromagnetisches Material, dem während der Herstellung eine Vormagnetisierung eingeprägt wird. Dadurch ist die in Figur 3 dargestellte Vorzugsrichtung für die die jeweiligen Leiterbahnen der statischen Ebenen 10, 20 durchfließenden Ströme vorgegeben. Die Leiterbahnen der statischen Ebenen 10, 20 entsprechen bei Vergleich mit einem herkömmlichen Elektromotor dem Stator, die Leiterbahn der beweglichen Ebene 30 dem Rotor. Der von der Leiterbahn der Ebene 30 erzeugte Strom wird gleichgerichtet und geglättet, um den Funktionseinheiten der integrierte Schaltung der Chipkarte 1 bereitgestellt zu werden. Zusätzlich kann ein Energiespeicher in Form eines Kondensators mit hoher Speicherkapazität und geringen Verlusten vorgesehen werden, um die erzeugte elektrische Energie länger zu speichern oder eine wiederaufladbare Batterie zu speisen. Berechnungen haben ergeben, daß mit herkömmlichen Techniken ausreichend Energie erzeugbar ist, um beispielsweise ein Chipkarten-IC kurzfristig mit ausreichend Versorgungsspannung für ordnungsgemäßen Betrieb zu versorgen.

Bei der in Figur 4 dargestellten alternativen Ausführungsform sind die Leiterbahnabschnitte 15a, 15b, 15c derart miteinander verbunden, daß sie von einem Strom in jeweils gleiche Richtung durchflossen werden. Es resultiert ein gleichgerichtetes Magnetfeld, dessen Feldlinien B15 parallel zur Ebene 10 verlaufen. Die andere statische Ebene 20 weist entsprechende Leiterbahnen 25a, 25b, 25c auf, die ebenfalls von einem Strom jeweils gleicher Richtung durchflossen werden, wobei jedoch der Strom im Vergleich zur Ebene 10 in entgegengesetzte Richtung orientiert ist. Die Ebene 30 ist in nur einer Stellung 303 gezeigt und weist Leiterbahnabschnitte 35a, 35b, 35c auf. Der Leiterbahnabschnitt 35a bildet mit einem weiteren Leiterbahnabschnitt 36a eine Spule. Der Leiterbahnabschnitt 36a ist in Gegensatz zur Figur 3 in der statischen Ebene 10 angeordnet und zwar zwischen den beiden Abschnitten 15a, 15b der den Erregerstrom führenden Leiterbahn der Ebene 10. Für die bewegliche Verbindung der Abschnitte 35a, 36a zur Bildung einer Spule gibt es eine Vielzahl von gut bekannten Lösungen. In entsprechender Weise bildet der Abschnitt 35b eine Spule mit dem Abschnitt 36b und der Abschnitt 35c eine Spule mit dem Abschnitt 36c.

Bei einer Vibration der Ebene 30 verändern sich die jeweiligen Flächen der Spulen, so daß sich der die Spulen durchdringende magnetische Fluß ändert. Aufgrund der Flußänderung wird in den genannten Spulen ein Strom erzeugt. Durch Parallelschalten der Spulen ist ein Summenstrom abgreifbar, welcher teilweise als Erregerstrom in die Leitungsabschnitte 15a, 15b, 15c sowie 25a, 25b, 25c der feststehenden Ebenen 10, 20 rückgespeist wird.

Während bei der in Figur 3 gezeigten Anordnung die Spulenfläche 32 parallel zu den statischen und beweglichen Ebenen verläuft steht die Spulenfläche 37 bei dem in Figur 4 gezeigten Ausführungsbeispiel senkrecht zu den genannten Ebenen.

Jedem ersten Leiterbahnabschnitt, z.B. 11a oder 15a, des statischen Substratteils 10 ist je einer der Leiterbahnabschnitte, z.B. 21a bzw. 25a, des weiteren statischen Substratteils 20 zugeordnet derart, daß diese zugeordneten Abschnitte im wesentlichen parallel übereinander liegen. Elektrisch sind solche einander zugeordnete Leiterbahnabschnitte derart miteinander gekoppelt, daß sie von Strömen verschiedener Richtung durchfließbar sind, z.B. I11a, I21a.

Die Ebenen 10, 20, 30 sind aus einem geeigneten isolierenden Substrat hergestellt. Zweckmäßigerweise eignet sich hierfür mit einem Oxid überzogenes Silizium. Silizium kann mit herkömmlichen photolithographischen Techniken und Ätztechniken strukturiert werden. Die gezeigten Ausführungsbeispiele weisen zwei statische Ebenen 10, 20 auf. Für die prinzipielle Wirkungsweise genügt es jedoch, wenn eine statische Ebene, beispielsweise Ebene 10 mit einer entsprechenden Leiterbahn alleine vorgesehen ist. Bei der in Figur 4 dargestellten Ausführung werden die Leiterbahnen 15a und 25a zweckmäßigerweise an ihren hinter der Schnittebene liegenden Ende durch einen vertikalen Kontakt miteinander verbunden, und die Abschnitte 25a, 15b werden in geeigneter Weise an ihrem vor der Schnittebene liegenden Ende miteinander verbunden, etc. Dadurch werden die dargestellten Leiterbahnabschnitte mit einem Strom in der eingezeichneten Richtung versorgt.

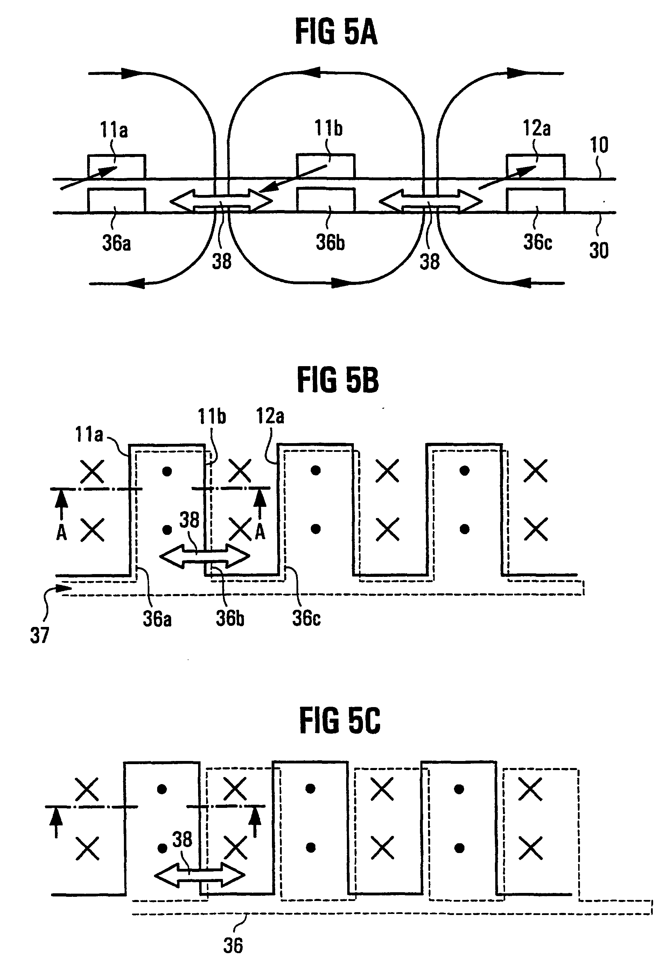

In der Figur 5 ist eine dritte Ausführungsform dargestellt, bei der die schwingende, bewegliche Ebene 30 parallel zur statischen Ebene 10 beweglich angeordnet ist. Die im Schnitt dargestellten Leiterbahnen sind mäanderförmig ausgeführt. So fließt der Strom durch die Leiterbahnabschnitte 11a, 11b, 12a der starren Ebene 10 für jeweils benachbarte Leiterbahnabschnitte in entgegengesetzte Richtung. Die Leiterbahnen 36a, 36b, 36c der beweglichen Ebene 30 sind zu einer Spule zusammengeschaltet. Der durch die Leiterbahnabschnitte 11a, 11b, 12a fließende Strom erzeugt Magnetfelder, die die jeweiligen Leiterbahnabschnitte in entgegengesetzter Orientierung umgeben. Die bewegliche Ebene 30 schwingt in Richtung 38, d.h. parallel zur feststehenden Ebene 10.

In Figur 5 (a) ist der Schnitt längs der Schnittlinie A-A in Figur 5 (b) dargestellt. Die schwingende Ebene 36 ist in größtmöglicher Auslenkung nach links eingezeichnet. Die magnetischen Feldlinien verlaufen um die Leiterbahnabschnitte 11a, 11b, 12a herum senkrecht zur Zeichenebene. In Figur 5 (c) ist dieselbe Ansicht dargestellt, wenn die schwingende Ebene 36 ihre größtmögliche Auslenkung nach rechts aufweist. Wenn die aus den Leiterbahnabschnitten 36a, 36b, 36c und entsprechenden weiteren Leiterbahnabschnitten gebildete Spule 36 von der in Figur 5 (b) zu der in Figur 5 (c) dargestellten Bewegungsphase entsprechend der Bewegungsrichtung 38 übergeht, ändert sich der von zwei benachbarten Leiterbahnabschnitten, z.B. 36a und 36b oder 36b und 36c, umfaßte magnetische Fluß, so daß an den Abgriffen 37 der Spule 36 eine Spannung induziert wird. Die Abschnitte 36a, 36b, 36c der beweglichen Ebene 36 sind seriell miteinander verbunden, so daß sie von einem gemeinsamen Strom durchflossen werden.

## Patentansprüche

1. Schaltungsanordnung zur mobilen Anwendung mit einer integrierten Schaltung (2) und einer mikromechanischen Einrichtung (4) zur Erzeugung einer die integrierte Schaltung (2) versorgenden Versorgungsspannung, wobei die mikromechanische Einrichtung (4) umfaßt:
- einen ersten Substratteil (10) mit ersten Leiterbahnabschnitten (11a, 11b, 12a, 12b, 15a, 15b, 15c) und einem zweiten Substratteil (30), der relativ zum ersten Substratteil beweglich angeordnet ist, mit zweiten Leiterbahnabschnitten (30a, 30b, 31a, 31a, 35a, 35b, 35c) und
- Mittel zum Abgriff einer an den Leiterbahnabschnitten des zweiten Substratteils (30) induzierten Spannung, die mit der integrierten Schaltung (2) zur Zuführung von Versorgungsspannung gekoppelt sind.

2. Anordnung nach Anspruch 1,
**dadurch gekennzeichnet, daß**
benachbarte Leiterbahnabschnitte (11a, 11b) des ersten Substratteils (10) so miteinander verbunden sind, daß ein durch sie fließender Strom in gegengesetzte Richtung weist, und daß benachbarte Leiterbahnabschnitte (30a, 30b) des zweiten Substratteils (30) miteinander verbunden sind, um eine Spule zu bilden.

3. Anordnung nach Anspruch 1,
**dadurch gekennzeichnet, daß**
benachbarte erste Leiterbahnabschnitte (15a, 15b) im ersten Substratteil (10) derart miteinander verbunden sind, daß ein durch sie fließender Strom gleiche Richtung aufweist, und daß ein zweiter Leiterbahnabschnitt (35a) im zweiten Substratteil (30) mit einem weiteren Leiterbahnabschnitt (36a) im ersten Substratteil (10) verbunden ist, um eine Spule zu bilden.

4. Anordnung nach einem Ansprüche 1 bis 3,
**dadurch gekennzeichnet, daß**
ein weiterer Substratteil (20) vorgesehen ist, der mit dem ersten Substratteil (10) starr verbunden ist, daß der weitere Substratteil (20) Leiterbahnabschnitte (21a, 21b, 22a, 25a, 25b, 25c) aufweist, die mit den ersten Leiterbahnabschnitten des ersten Substratteils (10) gekoppelt sind und daß der zweite Substratteil (30) zwischen dem ersten und dem weiteren Substratteil (10, 30) angeordnet ist.

5. Anordnung nach Anspruch 4,
**dadurch gekennzeichnet, daß**
jedem ersten Leiterbahnabschnitt (11a, 11b, 12a, 15a, 15b, 15c; 21a, 21b, 22a, 25a, 25b, 25c) des ersten Substratteils (10) je einer der Leiterbahnabschnitte des weiteren Substratteils (20) zugeordnet ist und daß einander zugeordnete Leiterbahnabschnitte derart miteinander gekoppelt sind, daß sie von Strömen verschiedener Richtung durchfließbar sind.

6. Anordnung nach Anspruch 2,
**dadurch gekennzeichnet, daß**
zwei benachbarte zweite Leiterbahnabschnitte (30a, 30b) des zweiten Substratteils (30) eine Spule bilden, deren Spulenfläche (32) parallel zu einer vom zweiten Substratteil (30) gebildeten Ebene verläuft.

7. Anordnung nach Anspruch 3,
**dadurch gekennzeichnet, daß**
einer der zweiten Leiterbahnabschnitte (35a) des zweiten Substratteils (30) und einer der weiteren Leiterbahnabschnitte (36a) des ersten Substratteils (10) eine Spule bilden, deren Spulenfläche (37) senkrecht zu einer durch den zweiten Substratteil (30) gebildeten Ebene verläuft.

8. Anordnung nach Anspruch 1 oder 2,
**dadurch gekennzeichnet, daß**
der zweite Substratteil (30) in eine Richtung (37, 39) senkrecht zum ersten Substratteil (10) beweglich angeordnet ist.

9. Anordnung nach Anspruch 1 oder 2,
**dadurch gekennzeichnet, daß**
der zweite Substratteil (30) in eine Richtung (38) parallel zum ersten Substratteil (10) beweglich angeordnet ist.

10. Anordnung nach einem der Ansprüche 1 bis 9,
**dadurch gekennzeichnet, daß**
die ersten und zweiten Leiterbahnabschnitte des ersten Substratteils (10) bzw. des zweiten Substratteils (30) elektrisch gekoppelt sind, so daß ein durch die ersten Leiterbahnabschnitte fließender Strom (I11a, I11b, I12a) aus einem in den zweiten Leiterbahnabschnitten durch Bewegung induzierbaren Strom erzeugbar ist.

11. Anordnung nach einem der Ansprüche 1 bis 10,
**dadurch gekennzeichnet, daß**
die ersten Leiterbahnabschnitte des ersten Substratteils (10) ferromagnetisches Material enthalten.

12. Anordnung nach einem der Ansprüche 1 bis 11
**gekennzeichnet durch**
einen Energiespeicher, der mit den zweiten Leiterbahnabschnitten des zweiten Substratteils (30) gekoppelt ist.
